# EUROPÄISCHE PATENTSCHRIFT

(11) **EP 0 561 235 B1**
(45) Veröffentlichungstag und Bekanntmachung des Hinweises auf die Patenterteilung: **15.05.1996**
(21) Anmeldenummer: 93103529.9
(22) Anmeldetag: 05.03.1993
(51) Int. Cl.: B01J 2/30, A23K 1/22, C05C 9/00, C05G 3/00

(54) **Mit einer Melaminpulverschicht versehenes Harnstoffgranulat**
Urea granules coated with melanin powder
Granulés contenant de l'urée revêtus avec mélanine

(30) Priorität: 18.03.1992 AT 544/92
(43) Veröffentlichungstag der Anmeldung: 22.09.1993
(73) Patentinhaber: Agrolinz Melamin GmbH, A-4021 Linz (AT)
(72) Erfinder: Szölgyenyi, Gerald, Dipl.-Ing. Dr., A-4040 Linz (AT); Jäger, Emmerich, Dr., A-4532 Rohr (AT); Sykora, Rudolf, Dr., A-4040 Linz (AT); Wolfmaier, Franz, A-4040 Linz (AT)
(74) Vertreter: Kunz, Ekkehard, Dr.

(56) Entgegenhaltungen:
- CH-A- 421 938
- DE-B- 1 164 392
- GB-A- 876 676
- GB-A- 1 049 464
- US-A- 3 202 501

## Beschreibung

Die Erfindung betrifft ein mit einer Melaminpulverschicht zur Vermeidung des Zusammenbackens versehenes Harnstoffgranulat.

Viele granulierte oder kristalline Industrieprodukte, darunter auch Harnstoff, neigen bei längerer Lagerung oder beim Transport zum Zusammenbacken. Diese Eigenschaft wirkt sich in der Regel negativ auf die Qualität, Auslagerung, Ausstreuung, Kornstabilität und anderes aus.
Zum Schutz dieser Produkte gegen das Zusammenbacken ist es bekannt, diese mit Puder zu überziehen. Als Puderstoffe kommen dabei feinteiliger Kalk, Kieselgur, Talkum, Tone und ähnliches in Betracht. Weiters ist aus DE-OS-2039599 bekannt, daß Harnstoff, vermischt mit Biuret, kaum mehr zum Zusammenbacken neigt. Diese Mittel zur Verringerung des Zusammenbackens müssen jedoch in großen Mengen zugesetzt werden, um eine ausreichende Wirkung zu erzielen.
Aus US-PS-3837835 ist weiters bekannt, körnige Substanzen, wie zum Beispiel Düngemittel auf der Basis von Ammonnitrat, mit durch längere Alkylketten substituierten oder mit Ethergruppen substituierten s-Triazinen zu behandeln. Solche substituierten s-Triazine sind aber relativ komplizierte Verbindungen, die außerdem bei einer eventuellen Weiterverarbeitung des Harnstoffgranulates zu Melamin stören.

Es wurde nun unerwarteterweise gefunden, daß das Zusammenbacken von Harnstoffgranulat durch die Zumischung von Melaminpulver zu dem Harnstoffgranulat in großem Maße verringert werden kann.

Gegenstand der Erfindung ist daher ein mit einer Pulverschicht zur Vermeidung des Zusammenbackens versehenes Harnstoffgranulat, das dadurch gekennzeichnet ist, daß die Pulverschicht aus 0,01 bis 0,6 Gewichtsprozent Melamin, bezogen auf das Gesamtgewicht des Harnstoffgranulates, besteht.
Melamin kann dabei als handelsübliches, gereinigtes Produkt eingesetzt werden. Es ist aber auch möglich, verunreinigtes Melamin aus dem Melaminsyntheseprozeß, sogenanntes Mutterlaugenmelamin, zu verwenden, da die geringfügigen Verunreinigungen, wie z.B. Ammelin oder Ammelid, bei einer eventuellen Weiterverarbeitung des Harnstoffgranulates zu Melamin keinen störenden Einfluß haben, da diese Verunreinigungen im Melaminprozeß zum Großteil wieder zu Melamin umgewandelt werden.
Auch bei einem Einsatz des mit Mutterlaugenmelamin beschichteten Harnstoffgranulates, etwa in der Düngemittel- oder in der Futtermittelindustrie ergibt sich durch die geringen Mengen der Verunreinigungen kein Nachteil.
Das Melamin wird dem Harnstoffgranulat pulverförmig in Pudertrommeln, Vibrationsrinnen oder sonstigen geeigneten Vorrichtungen bei Raumtemperatur zugemischt. Um die Verteilung auf dem Harnstoffgranulat zu erleichtern und um eine gleichmäßige und möglichst effektive Wirkung bei Anwendung der kleinstmöglichen Menge an Zusatz zu erzielen, wird Melamin in möglichst feinteiliger Form verwendet. Die Dauer des Mischvorganges hängt dabei von der Wahl des Mischapparates und dem gewünschten Durchsatz ab. Die Menge an Melamin beträgt dabei 0,01 bis 0,6 Gewichtsprozent, vorzugsweise etwa 0,02 bis 0,4 Gewichtsprozent, bezogen auf das Gesamtgewicht des Harnstoffgranulates.

Die Verminderung des Zusammenbackens von Harnstoff durch die Zumischung von Melamin wurde mittels der Scherkraftbestimmung nach Jenike (z.B. Chem. Technologie, Winnacker-Küchler, 4. Auflage, Band 1, Seite 120) ermittelt. Die Proben wurden dabei jeweils für 23 Stunden bei Raumtemperatur mit einem Kolben, mit einer Fläche von 22,9 cm² bzw. einem Durchmesser von 5,4 cm, belastet. Der ausgeübte Druck betrug 15,5 N/cm².

Die durchgeführten Versuche zeigen, daß nach Zumischung von 0,1 Gew.% bzw.0,035 Gew.% reinem Melamin oder von 0,1 Gew.% Mutterlaugenmelamin die Scherkraft um bis zu mehr als 50 % erniedrigt werden konnte, während bei bereits literaturbekannten Puderstoffen, wie zum Beispiel Biuret, wesentlich größere Mengen, etwa 5 Gew.%, zugesetzt werden mußten, um etwa dieselbe Wirkung zu erreichen.

### Beispiel 1:

1000 g Harnstoffgranulat mit einem Wassergehalt von 0,26 %, bestimmt nach Karl-Fischer wurden mit 1 g (0,1 Gew.%) bzw. 2 g (0,2 Gew.%) Melamin mit einem Wassergehalt von 0,13 %, mittels eines Labormischers 15 Minuten lang vermischt.
Durch Zumischen von 0,1 % Melamin wurde die Scherkraft bereits von 43,7 N auf die Hälfte (22 N) verringert. Durch Zumischung von 0,2 % Melamin wurde eine Erniedrigung der Scherkraft auf 16,8 N erzielt.

### Beispiel 2:

1000 g Harnstoffgranulat, mit einem Wassergehalt von 0,25 %, wurden mit 1 g (0,1 Gew.%) Mutterlaugenmelamin, mit einem Wassergehalt von 1,3%, 15 Minuten lang in einem Labormischer vermischt. Es wurde dabei eine Erniedrigung der Scherkraft von 24,2 N auf 14,0 N erreicht.

### Beispiel 3:

37.500 g Harnstoffgranulat, mit einem Wassergehalt von 0,30 % wurden mit Melamin, mit einem Wassergehalt von 0,06 % in einer Betonmischmaschine 15 Minuten lang vermischt.
Durch Zugabe von 13 g (0,035 Gew.%) Melamin, bezogen auf das Harnstoffgranulat wurde die Scherkraft von 52,2 N auf 22,5 N um mehr als die Hälfte erniedrigt.

### Beispiel 4: Vergleichsbeispiel

1000 g Harnstoffgranulat mit einem Wassergehalt von 0,26 % wurden mit Biuret, Qualität Merck p.a., mit einem Wassergehalt von 2,92 % 15 Minuten lang in einem Labormischer vermischt.
Es wurde erst durch Zumischung von 53 g (5 Gew.%) Biuret eine annähernde Halbierung der Scherkraft von 50 N auf 29 N erreicht.

## Patentansprüche

1. Mit einer Pulverschicht zur Vermeidung des Zusammenbackens versehenes Harnstoffgranulat, dadurch gekennzeichnet, daß die Pulverschicht aus 0,01 bis 0,6 Gewichtsprozent Melamin, bezogen auf das Gesamtgewicht des Harnstoffgranulates, besteht.

2. Harnstoffgranulat nach Anspruch 1, dadurch gekennzeichnet, daß die Pulverschicht aus 0,02 bis 0,4 Gewichtsprozent Melamin, bezogen auf das Gesamtgewicht des Harnstoffgranulates, besteht.

3. Harnstoffgranulat nach Anspruch 1, dadurch gekennzeichnet, daß die Pulverschicht aus verunreinigtem, im Melaminsyntheseprozeß anfallendem Mutterlaugenmelamin besteht.

4. Verwendung des Harnstoffgranulates nach Anspruch 1, zum Einsatz in der Melaminsynthese.

## Claims

1. Urea granules coated with powder in order to prevent clumping, characterized in that the powder coating comprises from 0.01 to 0.6 % by weight of melamine, based on the total weight of the urea granules.

2. Urea granules according to claim 1, characterized in that the powder coating comprises from 0.02 to 0.4 % by weight of melamine, based on the total weight of the urea granules.

3. Urea granules according to claim 1, characterized in that the powder coating comprises impure mother liquor melamine produced in the melamine synthesis process.

4. Use of the urea granules according to claim 1 in the melamine synthesis.

## Revendications

1. Urée en granulat recouvert d'une souche de poudre de manière à éviter l'agglomération, caractérisée en ce que la couche de poudre se compose de 0,01 à 0,6 % en poids de mélamine par rapport au poids total d'urée en granulat.

2. Urée en granulat selon la revendication 1, caractérisée en ce que la couche de poudre se compose de 0,02 à 0,04 % en poids de mélamine, par rapport au poids total durée en granulat.

3. Urée en granulat selon la revendication 1, caractérisée en ce que la couche de poudre se compose de mélamine d'eau-mère impure, résultant du processus de synthèse de mélamine.

4. Utilisation de l'urée en granulat selon la révendication 1 dans la synthèse de la mélamine.
